# EUROPEAN PATENT APPLICATION

(11) **EP 4 608 024 A1**
(43) Date of publication of application: **27.08.2025**
(21) Application number: 22962491.1
(22) Date of filing: 21.10.2022
(51) Int. Cl.: H04W 56/00

(54) **TIMING ADVANCE (TA) MEASUREMENT METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Hersina, Günter
(86) International application number: PCT/CN2022/126841
(87) International publication number: WO 2024/082310

(57) **Abstract**

The present disclosure relates to the technical field of mobile communications, and provides a timing advance (TA) measurement method and apparatus, a communication device, and a storage medium. A UE may receive configuration information before the UE is handed over from a serving cell to a target cell, and measure a TA value of a candidate cell according to the configuration information. The present disclosure provides a solution for measuring TA values of candidate cells before cell handover of the UE, to obtain the TA value of each candidate cell for the UE in advance during TA management, thereby achieving rapid cell handover and reducing time overhead of handover.

## Description

### TECHNICAL FIELD

The disclosure relates to the field of mobile communication technologies, and in particular, to a method and an apparatus for measuring timing advance, a communication device, and a storage medium.

### BACKGROUND

With the increasing demand for mobility maintenance in communication technology, it is considered to introduce dynamic switching processes. In dynamic switching, the base station will maintain multiple candidate cells for the user equipment and select the target cell for the user equipment among the candidate cells. Due to the possible differences in Timing Advance (TA) values among different cells, there may still be significant handover delays in the handover process.

### SUMMARY

The present disclosure provides a method and an apparatus for measuring timing advance, a communication device and a storage medium, aiming to provide a scheme for measuring TA values of candidate cells before the UE performs cell handover.

Embodiments of a first aspect of the present disclosure provide a method for measuring timing advance. The method is performed by a user equipment (UE), and includes: receiving configuration information before the UE switches from a serving cell to a target cell; and measuring timing advance (TA) value(s) of candidate cell(s) according to the configuration information, wherein the target cell is selected from the candidate cell(s).

In some embodiments, measuring the TA value(s) of the candidate cell(s) according to the configuration information includes measuring the TA value(s) of the candidate cell(s) according to the configuration information at any of following time points: when a measurement cycle arrives, wherein the configuration information comprises the measurement cycle; when receiving the configuration information; when receiving an instruction to update TA of the serving cell; or when no instruction to update TA of the serving cell is received within a preset time period.

In some embodiments, the configuration information further includes identifier(s) of the candidate cell(s).

In some embodiments, measuring the TA value(s) of the candidate cell(s) according to the configuration information includes: performing beam measurement for all candidate cells and obtaining beam measurement results; selecting cells to be measured from the all candidate cells based on the beam measurement results; and measuring TA values of the cells selected.

In some embodiments, selecting cells to be measured from the all candidate cells based on the beam measurement results includes selecting the candidate cell whose beam measurement results meet at least one of the following conditions as the cell to be measured: a best beam measurement result of the candidate cell is greater than a sum of a best beam measurement result of the serving cell and a deviation value; an average value of beam measurement results of the candidate cell is greater than a sum of an average value of beam measurement results of the serving cell and a deviation value; an average value or a maximum value of beam measurement results of the candidate cell is greater than a preset threshold; or, a beam measurement result of the candidate cell ranks in top predetermined number of a result list, wherein the result list comprises the beam measurement results of the all candidate cells arranged in a descending order.

In some embodiments, the configuration information includes a measurement reference signal, and a fixed time difference *T*₀ between the candidate cell and the serving cell, wherein measuring the TA value of the candidate cell according to the configuration information includes: determining a downlink time difference Δ*T* between the candidate cell and the serving cell based on the measurement reference signal; and determining the TA value of the candidate cell according to a TA value of the serving cell, the fixed time difference *T*₀ and the downlink time difference Δ*T.*

In some embodiments, determining the downlink time difference Δ*T* between the candidate cell and the serving cell based on the measurement reference signal includes: determining a downlink transmission delay *T*₂ of the candidate cell based on the measurement reference signal; and determining the downlink time difference Δ*T* based on a downlink transmission delay *T*₁ of the serving cell and the downlink transmission delay *T*₂ of the candidate cell.

Embodiments of a second aspect of the present disclosure provide a method for measuring timing advance. The method is performed by a network device, and includes: sending configuration information to a user equipment (UE), wherein the configuration information is used to assist the UE in measuring timing advance (TA) value(s) of candidate cell(s) before switching from a serving cell to a target cell.

In some embodiments, the configuration information includes at least one of a measurement reference signal, a fixed time difference *T*₀ between the candidate cell and the serving cell, a measurement cycle, and an identifier of a candidate cell to be measured.

In some embodiments, the method further includes: sending an instruction to update TA of the serving cell to the UE.

Embodiments of a third aspect of the present disclosure provide an apparatus for measuring timing advance. The apparatus includes: a transceiver module, configured to receive configuration information before the UE switches from a serving cell to a target cell; and a measurement module, configured to measure timing advance (TA) value(s) of candidate cell(s) according to the configuration information.

Embodiments of a fourth aspect of the present disclosure provide an apparatus for measuring timing advance. The apparatus includes: a transceiver module, configured to send configuration information to a user equipment (UE), wherein the configuration information is used to assist the UE in measuring timing advance (TA) values of candidate cell(s) before switching from a serving cell to a target cell.

Embodiments of a fifth aspect of the present disclosure provide a communication device. The communication device includes: a transceiver; a memory; and a processor, coupled with the transceiver and the memory respectively, configured to control wireless signal transmission and reception of the transceiver by executing computer executable instructions on the memory, and capable of implementing the method described in the embodiments of the first aspect or the second aspect of the present disclosure.

Embodiments of a sixth aspect of the present disclosure provide a computer readable storage medium, stored with computer executable instructions which, when executed by a computer, enable the method described in the embodiments of the first aspect or the second aspect of the present disclosure to be implemented.

Embodiments of a seventh aspect of the present disclosure provide a communication system. The communication system includes a user equipment (UE) and a network device, wherein the UE is configured to implement the method described in the embodiments of the first aspect of the present disclosure, and the network device is configured to implement the method described in the embodiments of the second aspect of the present disclosure.

According to the method for measuring timing advance provided in embodiments of the present disclosure, the UE can receive configuration information before switching from the serving cell to the target cell, and measure the timing advance (TA) value of the candidate cell based on the configuration information. This disclosure provides a scheme for measuring the TA values of candidate cells before the UE performs cell switching, which obtains the TA values of the UE to each candidate cell in advance during TA management, achieving fast cell switching and reducing the time cost of switching.

Additional aspects and advantages of this disclosure will be partially presented in the following description, some of which will become apparent from the following description, or learned through practice of this disclosure.

### BRIEF DESCRIPTION OF THE DRAWINGS

The above and/or additional aspects and advantages of the present disclosure will become apparent and easily understood from the following description of the embodiments in conjunction with the accompanying drawings.
Fig. 1 is a schematic diagram of a UE performing cell switching according to an embodiment of the present disclosure.
Fig. 2 is a schematic flowchart of a method for measuring timing advance according to an embodiment of the present disclosure.
Fig. 3 is a schematic flowchart of a method for measuring timing advance according to an embodiment of the present disclosure.
Fig. 4 is a schematic flowchart of a method for measuring timing advance according to an embodiment of the present disclosure.
Fig. 5 is a schematic flowchart of a method for measuring timing advance according to an embodiment of the present disclosure.
Fig. 6 is a schematic flowchart of a method for measuring timing advance according to an embodiment of the present disclosure.
Fig. 7 is a schematic flowchart of a method for measuring timing advance according to an embodiment of the present disclosure.
Fig. 8 is a schematic flowchart of a method for measuring timing advance according to an embodiment of the present disclosure.
Fig. 9 is a schematic flowchart of a method for measuring timing advance according to an embodiment of the present disclosure.
Fig. 10 is a schematic diagram of measuring a TA value of a candidate cell according to an embodiment of the present disclosure.
Fig. 11 is a schematic flowchart of a method for measuring timing advance according to an embodiment of the present disclosure.
Fig. 12 is a schematic flowchart of a method for measuring timing advance according to an embodiment of the present disclosure.
Fig. 13 is a schematic flowchart of a method for measuring timing advance according to an embodiment of the present disclosure.
Fig. 14 is a schematic diagram showing interaction in a method for measuring timing advance according to an embodiment of the present disclosure.
Fig. 15 is a block diagram of an apparatus for measuring timing advance an embodiment of the present disclosure.
Fig. 16 is a block diagram of an apparatus for measuring timing advance according to an embodiment of the present disclosure.
Fig. 17 is a block diagram of a communication device according to an embodiment of the present disclosure.
Fig. 18 is a block diagram of a chip provided in an embodiment of the present disclosure.

### DETAILED DESCRIPTION

The following provides a detailed description of the disclosed embodiments, examples of which are shown in the accompanying drawings, where the same or similar reference numerals throughout indicate the same or similar elements or elements with the same or similar functions. The embodiments described below with reference to the accompanying drawings are exemplary and intended to explain the present disclosure, and should not be construed as limiting the present disclosure.

With the increasing demand for mobility maintenance in communication technology, it is considered to introduce a dynamic switching process, such as determining whether to switch based on layer 1 measurement results, i.e. beam measurement results, to reduce the delay of the switching process. In the dynamic switching process, the base station will maintain multiple candidate cells for the user equipment (UE), and determine whether to switch based on the beam measurement results, as well as which candidate cell to use as the target cell. Due to the possibility of different TA values in respective cells, in order to further reduce the delay of switching, it is considered to measure the TA values of respective candidate cells in advance. In R18, L1/L2 based inter-cell mobility was proposed, where the TA values of the user equipment to serving cells and candidate cells may be different. Generally speaking, when switching to different TA cells, random access is required to synchronize to the target cell.

In order to complete the switching as soon as possible, in this disclosure, it is considered to obtain the TA values of the UE to respective candidate cells in advance, so that the target cell can be accessed as soon as possible during the switching.

This disclosure proposes a method and an apparatus for measuring timing advance, a communication equipment, a storage medium, and a communication system, aiming to provide a TA measurement method and discuss the measurement of TA values from the UE to various candidate cells before the UE performs cell switching, thereby achieving fast switching.

It can be understood that the solution provided in this disclosure can be applied to, but is not limited to, 5G core networks and core networks supporting their subsequent communication technologies, such as Long Term Evolution (LTE), 5G-Advanced, Sixth Generation (6G), etc., which is not limited in this disclosure.

The following provides a detailed introduction to the solution provided in this disclosure in conjunction with the accompanying drawings.

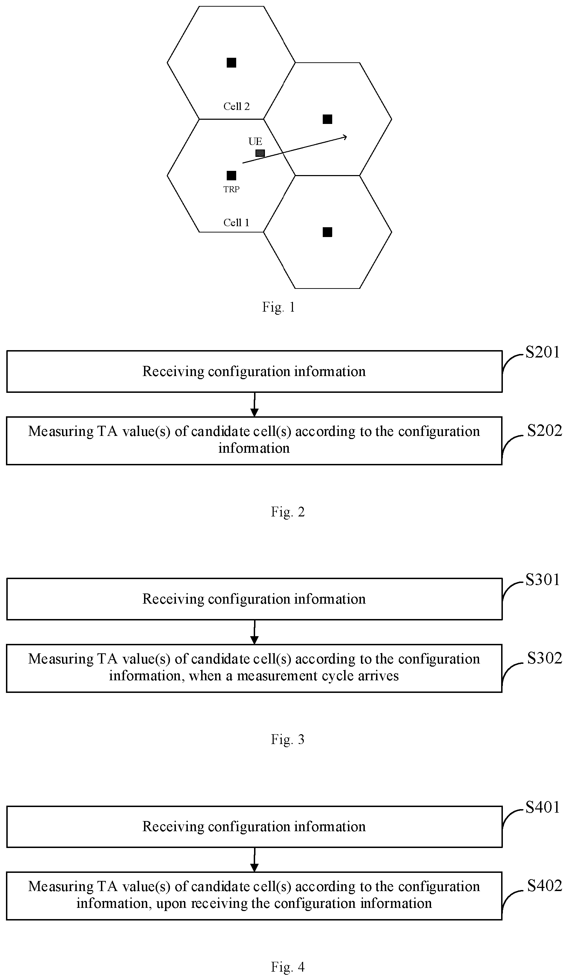

Fig. 2 shows a schematic flowchart of a method for measuring timing advance according to an embodiment of the present disclosure. The method is performed by a UE.

The UE described in this disclosure includes but is not limited to an intelligent terminal, a cellular phone, a wireless device, a handheld device, a mobile unit, a vehicle, an in-vehicle device, etc.

As shown in Fig. 2, the method may include the following steps.

S201, configuration information is received before the UE switches from a serving cell to a target cell.

In embodiments of the present disclosure, the serving cell may be a cell that is providing service to the UE, or may be understood as a cell whose signal covers the UE. The target cell may be another cell that the UE is about to move from the serving cell to, or may be understood as the cell to which the UE is about to switch from the current serving cell. The target cell may be a cell determined or selected from candidate cells to provide services for the UE. The candidate cell may be a cell maintained by the network device for the UE based on layer 3 measurement (in this field, it may be a measurement related to mobility in Radio Resource Management), which is managed by high-layer signaling.

In embodiments of the present disclosure, the UE may receive configuration information from the network device. For example, in some optional embodiments, the network device in embodiments of the present disclosure is an entity on the network side used for transmitting or receiving signals. For example, the network device may be an evolved NodeB (eNB), a transmission reception point (TRP), a next generation NodeB (gNB) in NR systems, a base stations in other future mobile communication systems, or an access node in wireless fidelity

(WiFi) systems. The specific technology and device form adopted by the network device is not limited in embodiments of the present disclosure. The network device provided in embodiments of the present disclosure may be composed of a central unit (CU) and distributed units (DU), where the CU may also be referred to as a control unit. The CU-DU structure can be used to separate the protocol layers of the network device, such as the base station, with functions of some protocol layers centrally controlled by the CU and functions of the remaining or all protocol layer distributed in the DUs, which are centrally controlled by the CU.

In some optional implementations of the present disclosure, there is no limitation on the sender of configuration information, and the UE can also receive configuration information from other devices.

In some embodiments of the present disclosure, the configuration information is used to assist the UE in TA measurement. For example, the configuration information may include but is not limited to at least one of a measurement reference signal, a fixed time difference *T₀* between the candidate cell(s) and the serving cell, identifier(s) of the candidate cell(s), or a measurement cycle, for measuring the TA values of the UE to each candidate cell. The specific parameters included in the configuration information are not limited in this disclosure.

In some embodiments of the present disclosure, the UE may receive the configuration information through various carriers or transmission methods, and different configuration information may also be transmitted through the same or different signaling, which is not limited in this disclosure. For example, the configuration information can be sent through any one of system messages, UE specific Radio Resource Control (RRC) signaling, Media Access Control-Control Element (MAC CE) signaling, or physical layer signaling (such as downlink control information (DCI)). For example, when the network device sends the system message, UE specific RRC signaling, MAC CE signaling, or DCI signaling to the UE, the above configuration information is carried in it and thus sent to the UE.

In some optional embodiments, the network device may send physical layer signaling (such as downlink control information (DCI)) to the UE, which includes information field values used to assist the UE in determining the configuration information. In other words, the UE can determine the configuration information based on the information field values indicated by the network device and the correspondence between information field values and configuration information. It can be understood that the above correspondence can be pre-defined in the UE or notified to the UE by the network device.

In the above two optional embodiments, the configuration information may include one or more pieces of information, which are not limited in this disclosure.

In some embodiments of the present disclosure, the configuration information may be sent in an explicit or implicit manner, which is not limited in this disclosure.

S202, TA value(s) of the candidate cell(s) is measured according to the configuration information.

In this disclosure, the UE can measure the TA value of the candidate cell according to the received configuration information, and there is no limitation on the measured object, measurement timing, and measurement method in this disclosure.

For example, the UE can measure the TA values of all candidate cells, or measure the TA values of the indicated candidate cells based on the identifiers of candidate cells indicated in the configuration information.

For another example, the UE can perform measurement when receiving the configuration information or at other time points.

For yet another example, the UE can perform TA measurement based on the parameters in the configuration information, or through other measurement methods.

In summary, according to the method for measuring timing advance provided in embodiments of the present disclosure, the UE can receive the configuration information before switching from the serving cell to the target cell, and measure the timing advance (TA) values of the candidate cells based on the configuration information. This disclosure provides a scheme for measuring the TA values of candidate cells before the UE performs cell switching, which obtains the TA values of the UE to each candidate cell in advance during TA management, achieving fast cell switching and reducing the time cost of switching.

Regarding the implementation of step S202 in the embodiment shown in Fig. 2, this disclosure provides multiple optional ways. The UE can measure the TA values of candidate cells at different time points, which will be described in detail through Figs. 3 to 6 in the following.

Fig. 3 shows a method for measuring timing advance according to an embodiment of the present disclosure. The method can be performed by a UE, and based on the embodiment shown in Fig. 2, as shown in Fig. 3, the method may include the following steps.

S301, configuration information is received before the UE switches from a serving cell to a target cell.

The principle of step S301 mentioned above is the same as that of step S201 in the embodiment shown in Fig. 2, and will not be repeated here.

S302, TA value(s) of candidate cell(s) is measured according to the configuration information when a measurement cycle arrives.

In embodiments of the present disclosure, the UE may periodically measure the TA values of candidate cells. The configuration information may include the measurement cycle, and the configuration information may be indicated by the network device. In other words, the network device can indicate to the UE the cycle for performing TA measurement, which can be a fixed cycle.

The length of this cycle is not limited in this disclosure and can be set according to the actual communication situation. For example, when the UE moves rapidly, the measurement cycle can be appropriately shortened to achieve fast cell switching during rapid movement.

In embodiments of the present disclosure, the UE can perform TA measurement according to the indicated measurement cycle. The UE can receive the configuration information before switching from the serving cell to the target cell, and based on the measurement cycle included in the configuration information, measure the advance timing (TA) values of candidate cells according to the configuration information every time the measurement cycle arrives. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the UE can perform TA measurements periodically, and the measurement cycle can be set according to the actual situation, improving the efficiency and accuracy of TA measurement.

Fig. 4 shows a schematic flowchart of a method for measuring timing advance according to an embodiment of the present disclosure. The method can be performed by a UE, and based on the embodiment shown in Fig. 2, as shown in Fig. 4, the method may include the following steps.

S401, configuration information is received before the UE switches from a serving cell to a target cell.

The principle of step S401 mentioned above is the same as that of step S201 in the embodiment shown in Fig. 2, and will not be repeated here.

S402, TA value(s) of candidate cell(s) is measured according to the configuration information when the configuration information is received.

In embodiments of the present disclosure, the UE can measure the TA values of the candidate cells upon receiving the configuration information. In other words, the UE can perform TA measurement in real time in response to receiving the configuration information.

In embodiments of the present disclosure, the UE may receive the configuration information before switching from the serving cell to the target cell, and measure the timing advance (TA) values of the candidate cells based on the configuration information at the time of receiving the configuration information. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the UE can perform TA measurement in real-time in response to receiving the configuration information, improving the response accuracy of TA measurement.

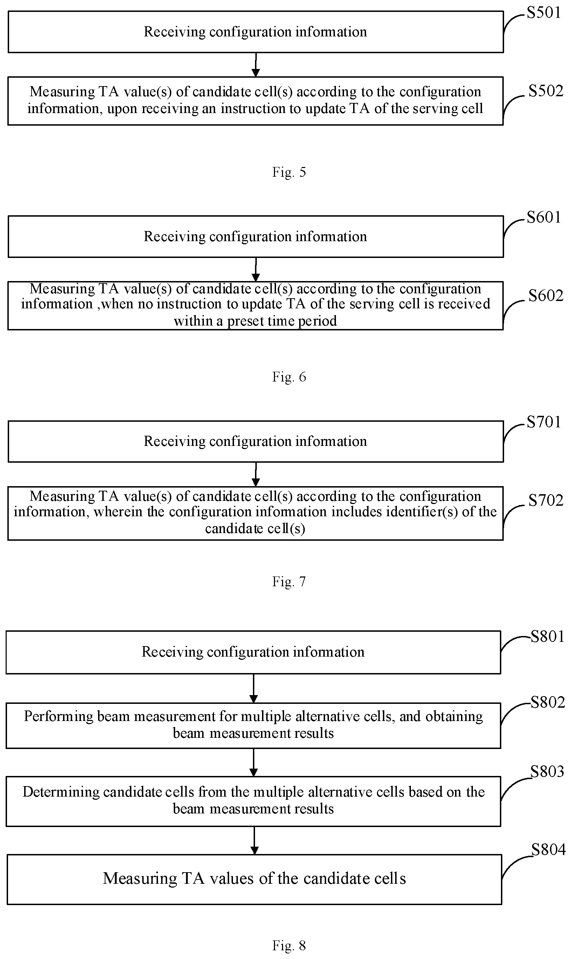

Fig. 5 shows a schematic flowchart of a method for measuring timing advance according to an embodiment of the present disclosure. The method can be performed by a UE, and based on the method shown in Fig. 2, as shown in Fig. 5, the method may include the following steps.

S501, configuration information is received before the UE switches from a serving cell to a target cell.

The principle of step S501 mentioned above is the same as that of step S201 in the embodiment shown in Fig. 2, and will not be repeated here.

S502, TA value(s) of candidate cell(s) is measured according to the configuration information when an instruction to update TA of the serving cell is received.

In embodiments of the present disclosure, the UE can measure the TA values of the candidate cells upon receiving the instruction to update the TA of the serving cell. It can be understood that the TA value of the serving cell currently covering the UE may vary, and the UE can trigger the process of measuring the TA values of the candidate cells in response to the update instruction to update the TA value of the serving cell.

In embodiments of the present disclosure, the instruction to update the TA of the serving cell may be sent by the network device, or may be sent by other devices or entities, which is not limited in this disclosure.

In embodiments of the present disclosure, the UE can perform TA measurement of candidate cells in response to the TA instruction for updating the serving cell. The UE can receive the configuration information before switching from the serving cell to the target cell, and measure the timing advance (TA) values of candidate cells based on the configuration information when receiving the TA instruction for updating the serving cell. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the UE can measure the TA values of candidate cells in response to receiving updated TA values of the serving cell, increasing the possibility of measurement timing for the UE to measure the TA values of candidate cells in advance, without the need for the UE to respond to a dedicated signaling for measuring TA values of candidate cells, reducing communication consumption.

Fig. 6 shows a schematic flowchart of a method for measuring timing advance according to an embodiment of the present disclosure. The method can be performed by a UE, and based on the embodiments shown in Fig. 2 and Fig. 5, as shown in Fig. 6, the method may include the following steps.

S601, configuration information is received before the UE switches from a serving cell to a target cell.

The principle of step S601 mentioned above is the same as that of step S201 in the embodiment shown in Fig. 2, and will not be repeated here.

S602, TA value(s) of candidate cell(s) is measured according to the configuration information when no instruction to update TA of the serving cell is received within a preset time period.

In embodiments of the present disclosure, a maximum time interval T is introduced, which can be set as default or configured in the configuration information. If no command to update the TA of the serving cell is received within T, the user will perform the TA measurement of the candidate cells once.

For example, based on the embodiment shown in Fig. 5, a time period can be preset for the UE. During this time period, when the UE receives an instruction to update the TA value of the serving cell, it can perform TA measurement of candidate cells in response to the instruction; when no instruction to update the TA value of the serving cell is received within this time period, the UE can perform TA measurement of candidate cells at the end of this time period.

In embodiments of the present disclosure, the preset time period may be configured by the network device, other devices or entities, determined through negotiation between the UE and the network device, or preset by the UE itself, which is not limited in this disclosure.

It can be understood that after the preset time period has passed and the UE has performed TA measurement of candidate cells, a new round of timing can be restarted. When the preset time period has passed for the second time, TA measurement of the candidate cells can be performed again. In some optional embodiments, when the UE receives a TA update instruction from the serving cell, it can re-measure the TAs of the candidate cells and restart a new round of timing for the preset time period.

In embodiments of the present disclosure, the instruction to update the TA of the serving cell may be sent by the network device, or other devices or entities, which is not limited in this disclosure.

In embodiments of the present disclosure, the UE can perform TA measurement of candidate cells in response to not receiving a TA instruction to update the serving cell within a preset time period. The UE can receive configuration information before switching from the serving cell to the target cell, and when the preset time period has passed and no TA instruction to update the serving cell has been received within the preset time period, measure the timing advance (TA) values of the candidate cells based on the configuration information. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the UE can measure the TA values of candidate cells when a preset time period has passed and no updated TA values of the serving cell have been received within that time period. This increases the possibility of measurement timing for UE to measure the TA values of candidate cells in advance, avoiding the situation where users cannot obtain the latest TA values to candidate cells due to a long period of time without receiving update instructions when the instruction to update the TA of the serving cell is used as a triggering condition.

It can be understood that in the embodiments described in Figs. 3 to 6 above, when the sender of the configuration information or the TA instruction to update the serving cell is the network device, it can be understood that the network device triggers the UE to perform TA measurement. The above embodiments can be implemented separately or in different combinations.

In an example, when the UE performs measurement periodically based on the embodiment shown in Fig. 3, it is also possible to, based on the embodiments shown in Figs. 4, 5, and 6, re-measure the TA value of the candidate cell when the measurement cycle has not yet arrived but configuration information is received or an instruction to update the serving cell TA is received.

In another example, after the UE performs TA measurement on the candidate cells upon receiving the configuration information based on the embodiment described in Fig. 4, it is also possible to, based on embodiment shown in Fig. 5, measure the TA values of the candidate cells again after receiving the instruction to update the TA of the serving cell each time.

In another example, after the UE performs TA measurement on the candidate cells upon receiving the instruction to update the TA of the serving cell based on the embodiment described in Fig. 5, it is also possible to, based on the embodiment shown in Fig. 6, measure the TA values of the candidate cells again when no instruction to update the TA of the serving cell is received with the preset time period.

The above are only examples of different combinations of embodiments, and any other combination falls within the scope of protection of this disclosure, which will not be repeated here.

Regarding the implementation of measuring the TA values of candidate cells in the embodiments shown above, this disclosure provides multiple optional methods. The UE can determine to measure the TA values of which candidate cells through different methods, which will be described in detail below with reference to Figures 7 and 8.

Fig. 7 shows a schematic flowchart of a method for measuring timing advance according to an embodiment of the present disclosure. The method can be performed by a UE. As shown in Fig. 7, the method may include the following steps.

S701, configuration information is received before the UE switches from a serving cell to a target cell.

The principle of step S701 mentioned above is the same as that of step S201 in the embodiment shown in Fig. 2, and will not be repeated here.

S702, TA value(s) of candidate cell(s) is measured according to the configuration information, wherein the configuration information includes identifier(s) of the candidate cell(s).

In some optional embodiments of the present disclosure, the network device may indicate to the UE which candidate cells need to be measured, and the UE may measure the TA values of the corresponding candidate cells in response to the indication from the network device. In this embodiment, if the network device indicates the identifiers of the candidate cells to the UE through the configuration information, the UE can measure the TA values of the candidate cells corresponding to the received identifiers of the candidate cells. The configuration information may not include the identifiers of candidate cells, in which case the network device can indicate to the UE through other means which candidate cells need to be measured. Of course, when the configuration information does not include the identifiers of candidate cells, the UE can also measure all candidate cells or determine which candidate cells to measure on its own, which will be discussed in the following embodiments.

In embodiments of the present disclosure, the UE can measure the TA value of the corresponding candidate cell based on its identifier. Before switching from the serving cell to the target cell, the UE can receive configuration information and perform TA measurement based on the identifier of the candidate cell included in the configuration information. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the UE can measure the TA values of some candidate cells according to the indication from the network device, avoiding blind measurement and reducing the cost of TA measurement.

Fig. 8 shows a schematic flowchart of a method for measuring timing advance according to an embodiment of the present disclosure. The method can be performed by a UE. As shown in Fig. 8, the method may include the following steps.

S801, configuration information is received before the UE switches from a serving cell to a target cell.

The principle of step S801 mentioned above is the same as that of step S201 in the embodiment shown in Fig. 2, and will not be repeated here.

S802, beam measurement is performed for all candidate cells, and beam measurement results are obtained.

In this embodiment, the UE can decide on its own which candidate cells to measure the TA values of without the need for the indication from the network device. For example, the UE can perform beam measurement on all candidate cells indicated or configured by the network device or other devices, and obtain beam measurement results for each candidate cell.

S803, cells to be measured are selected from the all candidate cells based on the beam measurement results.

In this embodiment, the UE itself can select candidate cells that meet certain conditions for measurement based on the beam measurement results of the candidate cells. Specifically, assuming that there are N candidate cells configured or indicated by the network device or other devices, the UE obtains the beam measurement results of all candidate cells by performing beam measurement on all candidate cells, and selects candidate cells that meet the conditions, such as selecting M cells that need to be measured for TA measurement. It can be understood that N can be greater than or equal to M.

In some embodiments of the present disclosure, the UE may select the cells to be measured from all candidate cells through various methods.

In a first optional example, the condition is that the best beam measurement result of the candidate cell is greater than the sum of the best beam measurement result of the serving cell and the deviation value, that is, the condition is that the best beam measurement result of the candidate cell>the best beam measurement result of the serving cell+offset. The candidate cell that meets this condition is selected as the cell that needs to be measured for TA measurement. Specifically, the deviation value can be either 0 or non-zero, which can be set according to the actual communication situation and is not limited in this disclosure. In addition, candidate cells that meet the condition that the best beam measurement result is equal to the sum of the best beam measurement result of the serving cell and the deviation value can also be selected as the cells that need to be measured for TA measurement.

In a second optional example, the condition is that the average value of the beam measurement results of the candidate cell is greater than the sum of the average value of the beam measurement results of the serving cell and deviation value, that is, the condition is that the average value of the beam measurement results of the candidate cell>the average value of the beam measurement results of the serving cell+offset. The candidate cell that meets this condition is selected as the cell that needs to be measured for TA measurement. In addition, candidate cells that meet the condition that the average value of the beam measurement results is equal to the sum of the average value of the beam measurement results of the service cell and the deviation value can also be selected as the cells that need to be measured for TA measurement.

In a third optional example, the condition is that the average or maximum value of the beam measurement results of the candidate cell is greater than the preset threshold, that is, the condition is that the average or maximum value of the beam measurement results of the candidate cell is greater than the threshold. The candidate cells that meet this condition are selected as the cells that need to be measured for TA measurement. It should be understood that the preset threshold can be set according to the actual communication situation and is not limited in this disclosure. In addition, candidate cells that meet the condition that the average or maximum value of the beam measurement results is equal to the preset threshold can also be selected as the cells that need to be measured for TA measurement.

In a fourth optional example, the condition is that the beam measurement result of the candidate cell ranks in top predetermined number of the result list, where the result list includes the beam measurement results of all candidate cells arranged in a descending order, and the candidate cells that meet this condition are selected as the cells that need to be measured for TA measurement.

It should be noted that any combination of the four optional examples mentioned above also falls within the scope of protection of this disclosure. For example, After determining from all candidate cells the candidate cells that meet the condition described in the first example above, the UE can then select the cells that meet the condition described in the fourth example as the final cells to be measured for TA, or select the candidate cells that meet some or all of the conditions described in the four examples as the cells to be measured for TA measurement. This disclosure does not limit the combination of the above optional examples.

This disclosure does not limit the possible combinations of this embodiment with other embodiments.

It should be understood that the above description is only shown as an example and does not represent a limitation on this disclosure. Other conditions and methods for determining candidate cells by the UE are within the scope of protection of this disclosure. The conditions for determining candidate cells can be set according to actual communication situations and are not limited in this disclosure.

S804, TA values of the candidate cells are measured.

In embodiments of the present disclosure, the UE can independently determine which candidate cells need to be measured. Specifically, the UE can perform beam measurements on all candidate cells and select the cells that need TA measurement based on the beam measurement results of all candidate cells through certain judgment conditions. This disclosure provides a scheme for measuring the TA values of candidate cells before the UE performs cell switching, which obtains the TA values of the UE to each candidate cell in advance, achieving fast cell switching and reducing the time cost of switching. In addition, the UE can decide on his own which candidate cells to choose for TA measurement based on the beam measurement results of different cells, reducing the cost of TA measurement.

It should be understood that the embodiments shown in Figures 7-8 above specifically describe how the UE determines which candidate cells to measure the TA values of, which can be implemented independently or in combination with the embodiments shown in Figures 3-6. For example, this disclosure can measure the TA values of candidate cells determined by any one or more of the methods shown in Figures 7-8 at any one or more measurement timing shown in Figures 3-6. Any combination of these falls within the scope of protection of this disclosure and will not be repeated here.

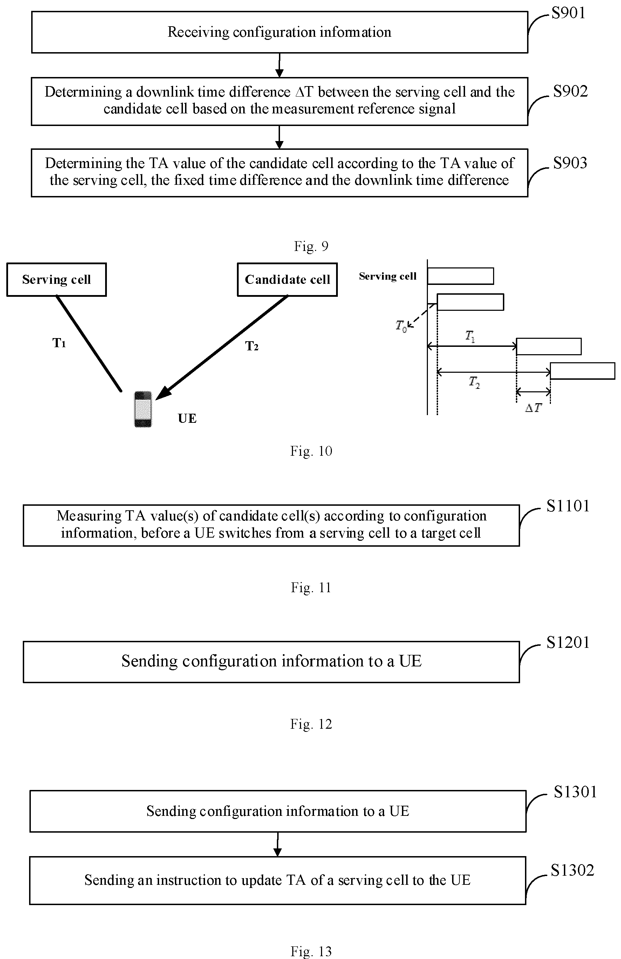

Regarding the implementation of measuring the TA values of candidate cells in the embodiments shown above, this disclosure provides multiple optional methods. The UE can measure the TA values of candidate cells through different measurement methods, which will be described in detail below with reference to Fig. 9.

Fig. 9 shows a schematic flowchart of a method for measuring timing advance according to an embodiment of the present disclosure. The method can be performed by a UE. As shown in Fig. 9, the method may include the following steps.

S901, configuration information is received before the UE switches from a serving cell to a target cell.

The principle of step S901 mentioned above is the same as that of step S201 in the embodiment shown in Fig. 2, and will not be repeated here.

In embodiments of the present disclosure, the configuration information may include a measurement reference signal, and a fixed time difference *T₀* between the candidate cell and the serving cell.

S902, a downlink time difference ΔT between the candidate cell and the serving cell is determined based on the measurement reference signal.

Specifically, in embodiments of the present disclosure, the configuration information received by the UE includes a measurement reference signal. Based on the measurement reference signal, the UE can determine the downlink transmission delay *T₂* of the candidate cell, as shown in Fig. 10. Afterwards, the UE determines the downlink time difference ΔT based on the downlink transmission delay *T₁* of the serving cell and the downlink transmission delay *T₂* of the candidate cell.

It can be understood that in some optional embodiments of the present disclosure, the configuration information may not include the measurement reference signal, and the UE may also determine the downlink transmission delay *T₂* of the candidate cell through other means to determine the downlink time difference, which is not limited by this disclosure.

S903, a TA value of the candidate cell is determined according to the TA value of the serving cell, the fixed time difference *T₀* and the downlink time difference ΔT.

In embodiments of the present disclosure, the UE may obtain the TA value of the serving cell through other signaling or other means, which is not limited in this disclosure.

As shown in Fig. 10, the UE may measure the downlink time difference ΔT between the serving cell and the candidate cell. Assuming that the TA of the candidate cell is *TA_{candidate cell},* and the TA of the serving cell is *TA_{serving cell},* then based on *TA_{candidate cell}* = *TA_{serving cell} +* 2Δ*T* - 2*T*₀, the TA value of the candidate cell can be measured.

It can be understood that if the serving cell and the candidate cell are synchronized, *T₀*=0; if not synchronized, the value is non-zero. In an optional implementation, the network device configures *T₀* to the UE. In other words, the network device can configure this value to the UE based on the synchronization status between the serving cell and the candidate cell. When synchronized, *T₀*=0 is configured to the UE; when not synchronized, the value of *T₀* configured to the UE can be any non-zero value, and the UE performs measurement based on the value configured by the network device. In some optional implementations, the value of *T₀* configured by the network device to the UE can be defaulted. When the UE does not receive this value configured by the network device, it defaults to *T₀*=0 and completes the measurement of TA of the candidate cell. In other words, the network device can explicitly or implicitly configure this value to the UE, which is not limited in this disclosure.

In embodiments of the present disclosure, the UE can perform TA measurement of candidate cells based on configuration information. Specifically, the configuration information received by the UE may include a measurement reference signal, and a fixed time difference *T₀* between the candidate cell and the serving cell. The UE may determine the TA value of the candidate cell based on the TA value of the serving cell, the fixed time difference T₀, and the downlink time difference ΔT. This disclosure provides a scheme for measuring the TA values of candidate cells before the UE performs cell switching, which obtains the TA values of the UE to each candidate cell in advance during TA management, achieving fast cell switching and reducing the time cost of switching.

It should be understood that the embodiment shown in Fig. 9 above describes how the UE measures the TA value of the candidate cell, which can be implemented independently or in combination with the embodiments shown in Figures 7-8 and/or Figures 3-6. For example, this disclosure can perform TA measurements on candidate cells determined by any one or more of the methods shown in Figures 7-8 using the measurement method described in Fig. 9 at any one or more measurement timing shown in Figures 3-6. Any combination of these falls within the scope of protection of this disclosure and will not be repeated here.

Fig. 11 shows a schematic flowchart of a method for measuring timing advance according to an embodiment of the present disclosure. The method can be performed by a UE. As shown in Fig. 11, the method may include the following steps.

S1101, TA value(s) of candidate cell(s) is measured according to configuration information before the UE switches from a serving cell to a target cell.

In this embodiment, the UE can measure the TA values of candidate cells based on the configuration information before switching from the serving cell to the target cell. This disclosure does not limit the source of the configuration information, which can be received by the UE from the network device or other devices, or can be pre-configured. In this embodiment, the timing for the UE to measure the TA values of candidate cells based on the configuration information can refer to the methods described in Figures 3 to 6 above, the method for the UE to determine to measure the TA values of which candidate cells can refer to the methods shown in Figures 7 to 8 above, and the method for the UE to measure the TA values of candidate cells can refer to the method shown in Fig. 9 above, which will not be repeated here.

In summary, according to the method for measuring timing advance provided in embodiments of the present disclosure, the UE can receive configuration information before switching from the serving cell to the target cell, and measure the timing advance (TA) values of the candidate cells based on the configuration information. This disclosure provides a scheme for measuring the TA values of candidate cells before the UE performs cell switching, which obtains the TA values of the UE to each candidate cell in advance during TA management, achieving fast cell switching and reducing the time cost of switching.

Fig. 12 shows a schematic flowchart of a method for measuring timing advance according to an embodiment of the present disclosure. The method can be performed by a network device.

The network device in embodiments of the present disclosure is an entity on the network side used for transmitting or receiving signals. For example, the network device may be an evolved NodeB (eNB), a transmission reception point (TRP), a next generation NodeB (gNB) in NR systems, a base stations in other future mobile communication systems, or an access node in wireless fidelity (WiFi) systems. The specific technology and device form adopted by the network device is not limited in embodiments of the present disclosure. The network device provided in embodiments of the present disclosure may be composed of a central unit (CU) and distributed units (DU), where the CU may also be referred to as a control unit. The CU-DU structure can be used to separate the protocol layers of the network device, such as the base station, with functions of some protocol layers centrally controlled by the CU and functions of the remaining or all protocol layer distributed in the DUs, which are centrally controlled by the CU.

As shown in Fig. 12, the method may include the following steps.

S1201, configuration information is sent to a user equipment (UE).

The configuration information is used to assist the UE in measuring timing advance (TA) value(s) of candidate cell(s) before switching from a serving cell to a target cell.

In some embodiments of the present disclosure, the configuration information is used to assist the UE in TA measurement. For example, the configuration information may include but is not limited to at least one of a measurement reference signal, a fixed time difference *T₀* between the candidate cell and the serving cell, an identifier of the candidate cell, or a measurement cycle, for measuring the TA values of the UE to each candidate cell. The specific parameters included in the configuration information are not limited in this disclosure.

In some embodiments of the present disclosure, the UE may receive the configuration information through various carriers or transmission methods, and different configuration information may also be transmitted through the same or different signaling, which is not limited in this disclosure. For example, the network device can send the configuration information through any one of system messages, UE specific Radio Resource Control (RRC) signaling, Media Access Control-Control Element (MAC CE) signaling, or physical layer signaling (such as downlink control information (DCI)). For example, when the network device sends the system message, UE specific RRC signaling, MAC CE signaling, or DCI signaling to the UE, the above configuration information is carried in it and thus sent to the UE.

In some optional embodiments, the network device may send physical layer signaling (such as downlink control information (DCI)) to the UE, which includes information field values used to assist the UE in determining the configuration information. In other words, the UE can determine the configuration information based on the information field values indicated by the network device and the correspondence between information field values and configuration information. It can be understood that the above correspondence can be pre-defined in the UE or notified to the UE by the network device.

In the above two optional embodiments, the configuration information may include one or more pieces of information, which are not limited in this disclosure.

In some embodiments of the present disclosure, the configuration information may be sent in an explicit or implicit manner, which is not limited in this disclosure.

Specifically, in an optional implementation, the configuration information sent by the network device to the UE may include a measurement reference signal. The measurement reference signal may be used for the UE to determine a downlink time difference ΔT between the candidate cell and the serving cell, and thus for the UE to measure the TA value of the candidate cell.

In another optional implementation, the configuration information sent by the network device to the UE may include a fixed time difference *T₀* between the serving cell and the candidate cell. When the serving cell and the candidate cell are synchronized, *T₀*=0; when not synchronized, *T₀* is a non-zero value. In an optional implementation, the network device configures *T₀* to the UE. In other words, the network device can configure this value to the UE based on the synchronization status between the serving cell and the candidate cell. When synchronized, *T₀*=0 is configured to the UE; when not synchronized, the value of *T₀* configured to the UE can be any non-zero value, and the UE performs measurement based on the value configured by the network device. In some optional implementations, the value of *T₀* configured by the network device to the UE can be defaulted. When the UE does not receive this value configured by the network device, UE determines *T₀*=0 by default and completes the measurement of TA of the candidate cell. In other words, the network device can explicitly or implicitly configure this value to the UE, which is not limited in this disclosure.

In another optional implementation, the configuration information sent by the network device to the UE may include a measurement cycle, which may be a fixed cycle used for the UE to periodically measure the TA values of candidate cells.

In another optional implementation, the configuration information sent by the network device to the UE may include identifiers of candidate cells, which can indicate that the UE only measures the TA values of these candidate cells.

It should be understood that the above optional real-time methods can be combined in any way, that is, the configuration information can include one or more of the above parameters, which are not limited here.

In summary, according to the method for measuring timing advance provided in embodiments of the present disclosure, the network device can send the configuration information to the UE, which can assist the UE in measuring the timing advance (TA) values of candidate cells before switching from the serving cell to the target cell. This disclosure provides a scheme for measuring the TA values of candidate cells before the UE performs cell switching, which obtains the TA values of the UE to each candidate cell in advance during TA management, achieving fast cell switching and reducing the time cost of switching.

Fig. 13 is a schematic flowchart of a method for measuring timing advance according to an embodiment of the present disclosure. The method is performed by a network device, and based on the embodiment shown in Fig. 12, as shown in Fig. 13, the method may include the following steps.

S1301, configuration information is sent to a user equipment (UE).

The configuration information is used to assist the UE in measuring timing advance (TA) value(s) of candidate cell(s) before switching from a serving cell to a target cell.

In an embodiment of the present disclosure, the configuration information may include at least one of a measurement reference signal, a fixed time difference *T₀* between the candidate cell and the serving cell, a measurement cycle, or an identifier of the candidate cell to be measured.

Specifically, in an optional implementation, the configuration information sent by the network device to the UE may include the measurement reference signal. The measurement reference signal may be used for the UE to determine a downlink time difference ΔT between the candidate cell and the serving cell, and thus for the UE to measure the TA value of the candidate cell.

In another optional implementation, the configuration information sent by the network device to the UE may include the fixed time difference *T₀* between the serving cell and the candidate cell. When the serving cell and the candidate cell are synchronized, *T₀*=0; when not synchronized, *T₀* is a non-zero value. In an optional implementation, the network device configures *T₀* to the UE. In other words, the network device can configure this value to the UE based on the synchronization status between the serving cell and the candidate cell. When synchronized, *T₀*=0 is configured to the UE; when not synchronized, the value of *T₀* configured to the UE can be any non-zero value, and the UE performs measurement based on the value configured by the network device. In some optional implementations, the value of *T₀* configured by the network device to the UE can be defaulted. When the UE does not receive this value configured by the network device, UE determines *T₀*=0 by default and completes the measurement of TA of the candidate cell. In other words, the network device can explicitly or implicitly configure this value to the UE, which is not limited in this disclosure.

In another optional implementation, the configuration information sent by the network device to the UE may include the measurement cycle, which may be a fixed cycle used for the UE to periodically measure the TA values of candidate cells.

In another optional implementation, the configuration information sent by the network device to the UE may include identifiers of the candidate cells, which can indicate that the UE only measures the TA values of these candidate cells.

It should be understood that the above optional real-time methods can be combined in any way, that is, the configuration information can include one or more of the above parameters, which are not limited here.

S1302, an instruction to update TA of the serving cell is sent to the UE.

In an optional implementation of the present disclosure, the network device can send the instruction to update the TA of the serving cell to the UE, which can further be used to trigger the UE to measure the candidate cell.

In summary, according to the method for measuring timing advance provided in embodiments of the present disclosure, the network device can send the configuration information to the UE, which can assist the UE in measuring the timing advance (TA) values of candidate cells before switching from the serving cell to the target cell. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the network device can instruct the UE to only measure the TA values of a portion of candidate cells or only measure the TA values of candidate cells at specific timing through configuration information or other triggering signaling, thereby reducing the cost of measuring TA.

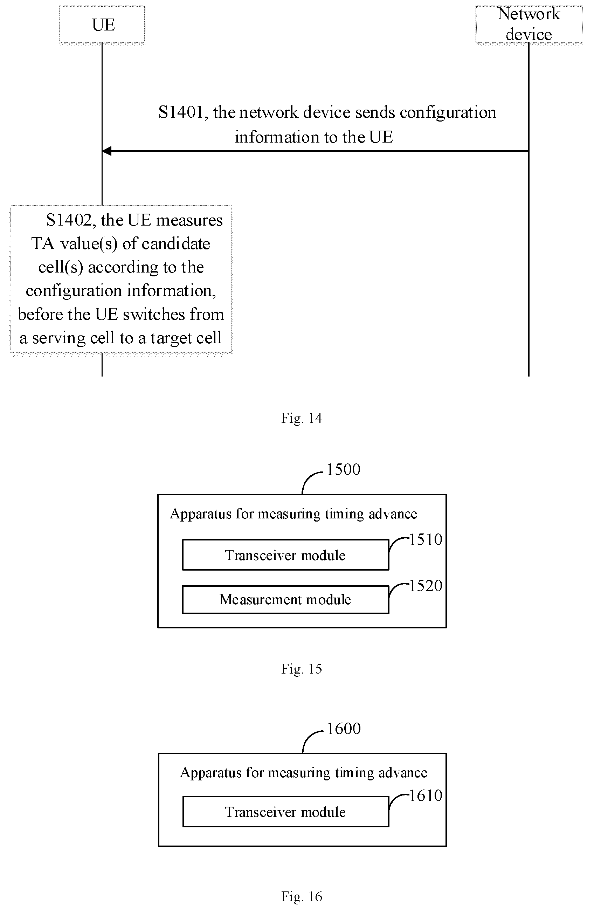

Fig. 14 is a schematic diagram showing interaction of a method for measuring timing advance according to an embodiment of the present disclosure. As shown in Fig. 14, this embodiment involves data/signaling interaction between the network device and the user equipment (UE) during performing the method for measuring timing advance. Based on the embodiments shown in Figures 1 to 13, the method includes the following steps.

S1401, the network device sends configuration information to the UE.

S1402, the UE measures TA values of candidate cells according to the configuration information before switching from a serving cell to a target cell.

The principles of steps 1401-1402 described above are similar to those described in Figures 1 to 13. Relevant descriptions can be found in Figures 1 to 13, and will not be repeated here.

In summary, according to the method for measuring timing advance provided in embodiments of the present disclosure, the network device can send the configuration information to the UE, which can assist the UE in measuring the timing advance (TA) values of candidate cells before switching from the serving cell to the target cell. This disclosure provides a scheme for measuring the TA values of candidate cells before the UE performs cell switching, which obtains the TA values of the UE to each candidate cell in advance during TA management, achieving fast cell switching and reducing the time cost of switching.

In the embodiments provided in the present disclosure, the methods provided in the present disclosure are introduced on the network device side and the user device side, respectively. In order to achieve the various functions in the methods provided in the embodiments of the present disclosure, the network device and the user equipment may include hardware structures and software modules, which can be implemented in the form of hardware structures, software modules, or a combination of hardware structures and software modules. One of the above functions can be executed in the form of hardware structure, software module, or a combination of hardware structure and software module.

Corresponding to the methods for measuring timing advance provided in the above embodiments, this disclosure also provides an apparatus for measuring timing advance. As the apparatus for measuring timing advance provided in embodiments of this disclosure corresponds to the methods for measuring timing advance provided in the above embodiments, the implementations of the methods for measuring timing advance are also applicable to the apparatus for measuring timing advance provided in this embodiment, and will not be described in detail in this embodiment.

Fig. 15 is a block diagram of an apparatus 1500 for measuring timing advance provided in an embodiment of the present disclosure. The apparatus 1500 for measuring timing advance can be arranged in a UE.

As shown in Fig. 15, the apparatus 1500 may include a transceiver module 1510 and a measurement module 1520.

The transceiver module 1510 is configured to receive configuration information before the UE switches from a serving cell to a target cell.

The measurement module 1520 is configured to measure timing advance (TA) value(s) of candidate cell(s) according to the configuration information.

In summary, according to the apparatus for measuring timing advance provided in embodiments of the present disclosure, the UE can receive the configuration information before the UE switches from the serving cell to the target cell, and measure the TA values of the candidate cells according to the configuration information. This disclosure provides a scheme for measuring the TA values of candidate cells before the UE performs cell switching, which obtains the TA values of the UE to each candidate cell in advance during TA management, achieving fast cell switching and reducing the time cost of switching.

In some optional embodiments, the measurement module 1520 is configured to measure the TA values of the candidate cells according to the configuration information at any of following time points:
when a measurement cycle arrives, wherein the configuration information comprises the measurement cycle;
when receiving the configuration information;
when receiving an instruction to update TA of the serving cell; or
when no instruction to update TA of the serving cell is received within a preset time period.

In some optional embodiments, the configuration information further includes identifier(s) of the candidate cell(s).

In some optional embodiments, the measurement module 1520 is configured to:
perform beam measurement for all candidate cells and obtain beam measurement results;
select cells to be measured from the all candidate cells based on the beam measurement results; and measuring TA values of the cells selected.

In some optional embodiments, the measurement module 1520 is configured to:
select the candidate cell whose beam measurement results meet at least one of the following conditions as the cell to be measured:
a best beam measurement result of the candidate cell is greater than a sum of a best beam measurement result of the serving cell and a deviation value;
an average value of beam measurement results of the candidate cell is greater than a sum of an average value of beam measurement results of the serving cell and a deviation value;
an average value or a maximum value of beam measurement results of the candidate cell is greater than a preset threshold; or
a beam measurement result of the candidate cell ranks in top predetermined number of a result list, wherein the result list comprises the beam measurement results of the all candidate cells arranged in a descending order. In some optional embodiments, the configuration information includes a measurement reference signal, and a fixed time difference *T*₀ between the candidate cell and the serving cell, and the measurement module 1520 is configured to:
determine a downlink time difference Δ*T* between the candidate cell and the serving cell based on the measurement reference signal; and
determine the TA value of the candidate cell according to a TA value of the serving cell, the fixed time difference *T*₀ and the downlink time difference Δ*T.*
in some optional embodiments, the measurement module 1520 is configure to:
determine a downlink transmission delay *T*₂ of the candidate cell based on the measurement reference signal; and
determine the downlink time difference Δ*T* based on a downlink transmission delay *T*₁ of the serving cell and the downlink transmission delay *T*₂ of the candidate cell.

In summary, according to the apparatus for measuring timing advance provided in embodiments of this disclosure, the UE can measure the timing advance (TA) values of candidate cells based on the configuration information before the UE switches from the serving cell to the target cell. The UE can measure the TA values of candidate cells at different time points, for all or part of the candidate cells, using different measurement methods. This disclosure provides a scheme for measuring the TA values of candidate cells before the UE performs cell switching, which obtains the TA value of the UE to each candidate cell in advance during TA management, achieves fast cell switching, and reduces the time cost of switching. In addition, by combining different schemes, the cost of measuring TA is reduced. The functional descriptions of the transceiver module 1510 and the measurement module 1520 in the above-mentioned apparatus 1500 can be found in the method embodiments described in Figures 1 to 11. The apparatus 1500 in this embodiment can implement any one or more of the method embodiments described in Figures 1 to 11, and will not be repeated here.

Fig. 16 is a block diagram of an apparatus 1600 for measuring timing advance provided in an embodiment of the present disclosure. The apparatus 1600 for measuring timing advance can be arranged in a network device.

As shown in Fig. 16, the apparatus 1600 may include a transceiver module 1610.

The transceiver module 1610 is configured to send configuration information to a user equipment (UE).

The configuration information is used to assist the UE in measuring timing advance (TA) value(s) of candidate cell(s) before switching from a serving cell to a target cell.

In summary, according to the apparatus for measuring timing advance provided in embodiments of the present disclosure, the network device can send configuration information to the UE, which can assist the UE in measuring the timing advance (TA) values of candidate cells before switching from the serving cell to the target cell. This disclosure provides a scheme for measuring the TA values of candidate cells before the UE performs cell switching, which obtains the TA values of the UE to each candidate cell in advance during TA management, achieving fast cell switching and reducing the time cost of switching.

In some optional embodiments, the configuration information may include at least one of a measurement reference signal, a fixed time difference *T*₀ between the candidate cell and the serving cell, a measurement cycle, and an identifier of a candidate cell to be measured.

In some optional embodiments, the transceiver module 1610 is configured to send an instruction to update TA of the serving cell to the UE.

In summary, according to the apparatus for measuring timing advance provided in embodiments of the present disclosure, the network device can send the configuration information to the UE, which can assist the UE in measuring the timing advance (TA) values of candidate cells before switching from the serving cell to the target cell. This disclosure provides a scheme for measuring the TA values of candidate cells before the UE performs cell switching, which obtains the TA values of the UE to each candidate cell in advance during TA management, achieving fast cell switching and reducing the time cost of switching. In addition, the network device can instruct the UE to only measure the TA values of a portion of candidate cells or only measure the TA values of candidate cells at specific timing through configuration information or other triggering signaling, thereby reducing the cost of measuring TA.

The functional description of the transceiver module 1610 in the above apparatus 1600 can be found in the method embodiments described in Figures 12 to 13. The apparatus 1600 in this embodiment can implement any one or more of the method embodiments described in Figures 12 to 13, and will not be repeated here.

In some embodiments of the present disclosure, a UE is also provided. The UE can receive configuration information and measure the timing advance (TA) values of candidate cells based on the configuration information before switching from the serving cell to the target cell, where the target cell is selected from the candidate cells. The relevant functional descriptions of the UE in this embodiment can be found in Figures 1 to 11. The UE is capable of implementing one or more of the method embodiments described in Figures 1 to 11, and will not be repeated here.

In some embodiments of the present disclosure, a network device is also provided. The network device can send configuration information to the UE, which is used to assist the UE in measuring the TA values of candidate cells before switching from the serving cell to the target cell. The relevant functional descriptions of the network device in this embodiment can be found in Figures 12 to 13. The network device is capable of implementing one or more of the method embodiments described in Figures 12 to 13, and will not be repeated here.

Embodiments of the present disclosure further provide a communication system. The communication system is applied to a core network. The communication system can be a Long Term Evolution (LTE) system, a 5th generation (5G) mobile communication system, a 5G new radio (NR) system, or other future new mobile communication systems.

The communication system includes a network device and a user equipment (UE). The network device sends configuration information to the UE, and the UE measures the timing advance (TA) value of the candidate cell based on the configuration information before switching from the serving cell to the target cell. The relevant functional descriptions of the UE in this embodiment can be found in Figures 1 to 11. The UE is capable of implementing one or more of the method embodiments described in Figures 1 to 11, and will not be repeated here. In addition, the relevant functional descriptions of the network device in this embodiment can be found in Figures 12 to 13. The network device is capable of implementing one or more of the method embodiments described in Figures 12 to 13, and will not be repeated here.

In summary, according to the communication system provided in embodiments of the present disclosure, the network device can send configuration information to the UE, and the UE can measure the timing advance (TA) values of candidate cells based on the configuration information before switching from the serving cell to the target cell. This disclosure provides a scheme for measuring the TA values of candidate cells before the UE performs cell switching, which obtains the TA values of the UE to each candidate cell in advance during TA management, achieving fast cell switching and reducing the time cost of switching.

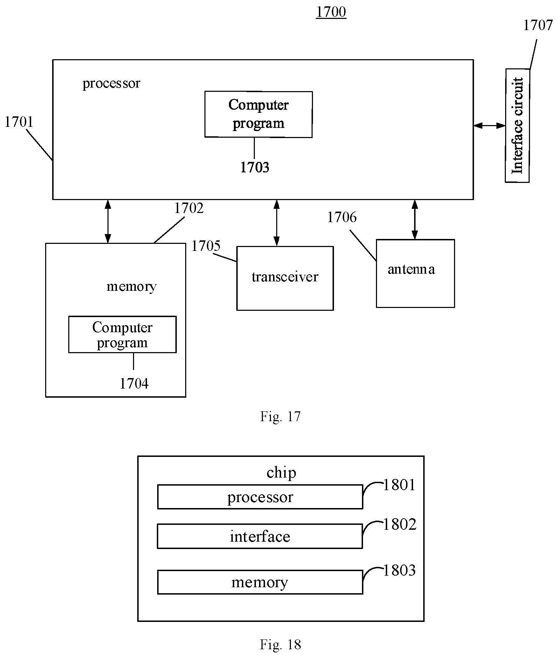

Please refer to FIG. 17, which is a block diagram of a communication device 1700 provided in an embodiment of the disclosure. The communication device 1700 may be a network device, or may be a user equipment, or may be a chip, a system on chip or a processor that supports the network device to implement the above methods, or may be a chip, a system on chip or a processor that supports the user equipment to implement the above methods. The device may be configured to implement the method described in the method embodiments, and for details, reference may be made to descriptions in the method embodiments.

The communication device 1700 may include one or more processors 1701. The processor 1701 may be a general purpose processor or a dedicated processor. For example, the processor 1701 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication device 1700 may further include one or more memories 1702 with a computer program 1704 stored thereon. The processor 1701 executes the computer program 1704 so that the communication device 1700 performs the method as described in the above method embodiments. Optionally, the memory 1702 may further store data. The communication device 1700 and the memory 1702 may be independently configured or integrated together.

Optionally, the communication device 1700 may further include a transceiver 1705 and an antenna 1706. The transceiver 1705 may be referred to as a transceiver unit, a transceiver machine or a transceiver circuit, configured to achieve a transceiver function. The transceiver 1705 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device 1700 may further include one or more interface circuits 1707. The interface circuit 1707 is configured to receive code instructions and transmit the code instructions to the processor 1701. The processor 1701 runs the code instructions so that the communication device 1700 performs the method according to the above method embodiment.

In an implementation, the processor 1701 may include a transceiver configured to implement receiving and transmitting functions. For example, the transceiver may be a transceiver circuit, or an interface, or an interface circuit. The transceiver circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the processor 1701 may store a computer program 1703, which runs on the processor 1701 and enables the communication device 1700 to perform the method described in the above method embodiments. The computer program 1703 may be solidified in the processor 1701, in which case the processor 1701 may be implemented by hardware.

In an implementation, the communication device 1700 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS(BiCMOS), silicon germanium(SiGe) and gallium arsenide(GaAs).

The communication device described in the above embodiments may be a network device or a user equipment, but the scope of the communication device described in the disclosure is not limited thereto, and a structure of the communication device may not be limited by Fig. 17. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others, and so forth.

In the case that the communication device may be a chip or a system on chip, please refer to a diagram of a structure of a chip as illustrated in Fig. 18. The chip illustrated in Fig. 18 includes a processor 1801 and an interface 1802, in which the number of processors 1801 may be one or more and the number of interfaces 1802 may be more than one.

Optionally, the chip further includes a memory 1803, configured to save necessary computer program and data.

Those skilled in the related art may understand that, various illustrative logical blocks and steps listed in embodiments of the disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored thereon is further provided in the disclosure. When the instructions are executed by a computer, steps in any one of the method embodiments are implemented.

A computer program product is further provided in the disclosure. The computer program product implements functions of any one of the above method embodiments when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

The present disclosure proposes a method for measuring TA values of the UE to each candidate cell, in order to ensure that the UE can quickly access the target cell during switching and reduce the time cost of switching.

Based on the present disclosure, an example of a specific scheme is as follows.
1. The user receives configuration information from the network, and measures TA values of candidate cells according to the configuration information.
2. Based on 1, the user periodically measure TA values of candidate cells according to the configuration information.
   - The user periodically measures the TA values of the candidate cells according to the configured parameters, as follows:
      For example, the user measures the downlink time difference ΔT between the candidate cell and the serving cell. Assuming that the TA of the candidate cell and the TA of the serving cell are *TA_{candidate cell}* and *TA_{serving cell}* respectively, then*TA_{candidate cell}* = *TA_{serving cell} +* 2Δ*T* - 2*T*₀. If the serving cell and the candidate cell are synchronized, *T*₀ = 0; and if not synchronized, it is non-zero, and needs to be configured by the network to the user.

   - Optionally, in order to reduce the cost of measuring TA, it is considered to measure some candidate cells. The candidate cells that need to be measured can be indicated by the network side, or the user can select candidate cells that meet certain conditions for measurement based on the beam measurement results of the candidate cells themselves. The conditions can be as follows:
      - Best beam measurement result of candidate cell > Best beam measurement result of serving cell + offset
      - Average value of beam measurement results of candidate cell > average value of beam measurement results of serving cell + offset
      - Average or maximum value of beam measurement results of candidate cell > threshold
      - The top N best measurement results are the measurement results of candidate cells
3. Based on 1 and 2, configuration information is received from the network side. The configuration information includes at least the measurement cycle, measurement reference signal, and the value of *T*₀ in 2. In addition, the configuration information can also include the identifiers of candidate cells that need to be measured.
4. Based on 1, the base station triggers the user to perform TA measurement.
   - When the user first receives the configuration, it performs a TA measurement on the candidate cell using the method described in the previous 2.
   - Afterwards, each time an instruction to update the TA of the serving cell is received, the TA value of the candidate cell is measured again.
   - Optionally, a maximum time interval T can also be introduced, which can be default or configured in the configuration information. If no command to update TA is received from the serving cell within T, the user will perform a TA measurement of the candidate cell once.
   - During each measurement, it is possible to measure all candidate cells, configure by the network the cells that need to be measured, or select by the user themselves the candidate cells that need to be measured based on the beam measurement results of each candidate cell.
5. Based on 1 and 4, configuration information is received from the network side, which includes at least a measurement reference signal and a fixed time difference *T*₀ between the candidate cell and the serving cell.

In summary, the present disclosure has the following beneficial technical effects: the present disclosure proposes a TA measurement method that can measure the TA values of the user to various candidate cells in advance in L1/L2 based inter cell mobility, without the need for a random access process, but rather the user itself measures the TA. When switching, it can access the target cell faster, reduce the time cost of switching, and also reduce the time cost of TA measurement based on random access.

The above example can be applied to all embodiments of the methods, apparatuses, devices, storage medium, systems, etc. described in this disclosure, and will not be repeated here.

Those skilled in the art may understand that various numbers such as first and second involved in disclosure are distinguished merely for convenience of description, and are not intended to limit the scope of embodiments of the disclosure, but also to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, the terms "machine-readable medium" and "computer-readable medium" refer to any computer program product, device, and/or apparatus (e.g., disk, optical disk, memory, programmable logic device (PLD)) used to provide machine instructions and/or data to a programmable processor, including machine-readable media that receive machine instructions as machine-readable signals. The term 'machine-readable signal' refers to any signal used to provide machine instructions and/or data to a programmable processor.

The systems and techniques described herein can be implemented in computing systems that include backend components (e.g., as data servers), or computing systems that include middleware components (e.g., application servers), or computing systems that include frontend components (e.g., user computers with graphical user interfaces or web browsers through which users can interact with the implementation of the systems and techniques described herein), or computing systems that include any combination of such backend components, middleware components, or frontend components. The components of the system can be interconnected through any form or medium of digital data communication, such as a communication network. Examples of communication networks include local area networks (LANs), wide area networks (WANs), and the Internet.

A computer system can include a client and a server. The client and server are generally far apart from each other and typically interact through a communication network. A relationship between the client and the server is generated by running computer programs on corresponding computers that have a client-server relationship with each other.

It should be understood that various forms of processes shown above can be used to reorder, add, or delete steps. For example, the steps described in this disclosure can be executed in parallel, sequentially, or in different orders, as long as they can achieve the desired results of the technical solution disclosed in this disclosure, which is not limited in this disclosure.

In addition, it should be understood that the various embodiments disclosed herein may be implemented separately or in combination with other embodiments as permitted by the scheme.

Ordinary technical personnel in this field can realize that the units and algorithm steps described in the embodiments of the present disclosure can be implemented through electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above are only specific embodiments of the present disclosure, but the scope of protection of the present disclosure is not limited to them. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A method for measuring timing advance, performed by a user equipment (UE), comprising:
receiving configuration information before the UE switches from a serving cell to a target cell; and
measuring timing advance (TA) value(s) of candidate cell(s) according to the configuration information, wherein the target cell is selected from the candidate cell(s).

2. The method of claim 1, wherein measuring the TA value(s) of the candidate cell(s) according to the configuration information comprises:
measuring the TA value(s) of the candidate cell(s) according to the configuration information at any of following time points:
when a measurement cycle arrives, wherein the configuration information comprises the measurement cycle;
when receiving the configuration information;
when receiving an instruction to update TA of the serving cell; or
when no instruction to update TA of the serving cell is received within a preset time period.

3. The method of claim 1 or 2, wherein the configuration information further comprises identifier(s) of the candidate cell(s).

4. The method of claim 1 or 2, wherein measuring the TA value(s) of the candidate cell(s) according to the configuration information comprises:
performing beam measurement for all candidate cells and obtaining beam measurement results;
selecting cells to be measured from the all candidate cells based on the beam measurement results; and
measuring TA values of the cells selected.

5. The method of claim 4, wherein selecting cells to be measured from the all candidate cells based on the beam measurement results comprises:
selecting the candidate cell whose beam measurement results meet at least one of the following conditions as the cell to be measured:
a best beam measurement result of the candidate cell is greater than a sum of a best beam measurement result of the serving cell and a deviation value;
an average value of beam measurement results of the candidate cell is greater than a sum of an average value of beam measurement results of the serving cell and a deviation value;
an average value or a maximum value of beam measurement results of the candidate cell is greater than a preset threshold; or
a beam measurement result of the candidate cell ranks in top predetermined number of a result list, wherein the result list comprises the beam measurement results of the all candidate cells arranged in a descending order.

6. The method of any of claims 1-5, wherein the configuration information comprises a measurement reference signal, and a fixed time difference *T*₀ between the candidate cell and the serving cell, wherein measuring the TA value of the candidate cell according to the configuration information comprises:
determining a downlink time difference Δ*T* between the candidate cell and the serving cell based on the measurement reference signal; and
determining the TA value of the candidate cell according to a TA value of the serving cell, the fixed time difference *T*₀ and the downlink time difference Δ*T.*

7. The method of claim 6, wherein determining the downlink time difference Δ*T* between the candidate cell and the serving cell based on the measurement reference signal comprises:
determining a downlink transmission delay *T*₂ of the candidate cell based on the measurement reference signal; and
determining the downlink time difference Δ*T* based on a downlink transmission delay *T*₁ of the serving cell and the downlink transmission delay *T*₂ of the candidate cell.

8. A method for measuring timing advance, performed by a network device, comprising:
sending configuration information to a user equipment (UE),
wherein the configuration information is used to assist the UE in measuring timing advance (TA) value(s) of candidate cell(s) before switching from a serving cell to a target cell.

9. The method of claim 8, wherein the configuration information comprises at least one of a measurement reference signal, a fixed time difference *T*₀ between the candidate cell and the serving cell, a measurement cycle, or an identifier of a candidate cell to be measured.

10. The method of claim 8 or 9, further comprising:
sending an instruction to update TA of the serving cell to the UE.

11. An apparatus for measuring timing advance, comprising:
a transceiver module, configured to receive configuration information before the UE switches from a serving cell to a target cell; and
a measurement module, configured to measure timing advance (TA) value(s) of candidate cell(s) according to the configuration information.

12. An apparatus for measuring timing advance, comprising:
a transceiver module, configured to send configuration information to a user equipment (UE),
wherein the configuration information is used to assist the UE in measuring timing advance (TA) value(s) of candidate cell(s) before switching from a serving cell to a target cell.

13. A communication device, comprising: a transceiver; a memory; and a processor, coupled with the transceiver and the memory respectively, configured to control wireless signal transmission and reception of the transceiver by executing computer executable instructions on the memory, and capable of implementing the method of any of claims 1-7.

14. A communication device, comprising: a transceiver; a memory; and a processor, coupled with the transceiver and the memory respectively, configured to control wireless signal transmission and reception of the transceiver by executing computer executable instructions on the memory, and capable of implementing the method of any of claims 8-10.

15. A computer readable storage medium, stored with computer executable instructions which, when executed by a computer, enable the method of any of claims 1-10 to be implemented.

16. A communication system, comprising a user equipment (UE) and a network device, wherein the UE is configured to implement the method of any of claims 1-7, and the network device is configured to implement the method of any of claims 8-10.
